# EUROPÄISCHE PATENTANMELDUNG

(11) **EP 1 850 574 A1**
(43) Veröffentlichungstag der Anmeldung: **31.10.2007**
(21) Anmeldenummer: 06118589.8
(22) Anmeldetag: 08.08.2006
(51) Int. Cl.: H04M 11/02

(54) **Netzwerk für Daten- und Sprachkommunikation**

(30) Priorität: 27.04.2006 AT 3502006 U
(71) Anmelder: Etrix Elektrotechnik GmbH, 5020 Salzburg (AT)
(72) Erfinder: Bruckner, Thomas, 5310 Mondsee (AT)
(74) Vertreter: Laminger, Norbert

(57) **Zusammenfassung**

Ein Netzwerk für Daten- und Sprachkommunikation für Gebäude oder Gebäude-Komplexe, weist auch eine VoIP-Telefonanlage und mehrere IP-Telefonapparate auf, zumindest einer davon mit einer Anzeigeeinrichtung ausgestattet.

Um das Netzwerk mit erweiterter Funktionalität auszustatten und eine möglichst umfassende Leit- und Regeltechnik für alle Bereiche der Gebäudeleittechnik zu bieten, ist die Telefonanlage (2) über ein Internet-Protokoll mit einer Steuer- und Regeleinrichtung (4) für die Gebäudeleittechnik verbunden, wobei die Steuer- und Regeleinrichtung (4) einen Web-Server beinhaltet und zumindest einer der Telefonapparate (3) über ein Internet-Protokoll mit der Steuer- und Regeleinrichtung (4) kommuniziert.

## Beschreibung

Die Erfindung betrifft ein Netzwerk für Daten- und Sprachkommunikation für Gebäude oder Gebäude-Komplexe, umfassend eine VoIP-Telefonanlage und mehrere IP-Telefonapparate, zumindest einer davon mit einer Anzeigeeinrichtung ausgestattet.

Für verschiedenste Bereiche der Gebäudeleittechnik ist es bereits bekannt, Steuer- und Regeltechnik elektronisch zu steuern und dazu auch über Netzwerktechnologie wie TCP/IP und Ethernet zu kommunizieren. Auch die Möglichkeit über Internet oder Wireless LAN auf das Gebäudeleitsystem zuzugreifen und Anlagen und Gebäudeteile entsprechend den jeweiligen Anforderungen zu managen ist bereits vorgeschlagen worden.

Andererseits wird immer mehr die Integration von Sprache als weiterer Dienst in Datennetzwerke vorgenommen und so der Telefonie viele neue Möglichkeiten eröffnet. Anwendungen auf Servern und Arbeitsplatzcomputern, aber auch im Inter- oder Intranet, werden mit dem Telefon verschmelzen und diese auch zu einer vernetzten Anwendung werden lassen.

Die Aufgabe der vorliegenden Erfindung war es, ein Netzwerk wie eingangs angegeben mit erweiterter Funktionalität auszustatten und eine möglichst umfassende Leit- und Regeltechnik für alle Bereiche der Gebäudeleittechnik zu bieten.

Zur Lösung dieser Aufgabe ist das Netzwerk erfindungsgemäß dadurch gekennzeichnet, daß die Telefonanlage über ein Internet-Protokoll mit einer Steuer- und Regeleinrichtung für die Gebäudeleittechnik verbunden ist, wobei die Steuer- und Regeleinrichtung einen Web-Server beinhaltet und zumindest einer der Telefonapparate über ein Internet-Protokoll mit der Steuer- und Regeleinrichtung kommunizieren. Damit ist die optimale Einbindung der Telefonanlage in die Gebäudeleittechnik gewährleistet, um diverse Anlagen bzw. Verbraucher, beispielsweise Beleuchtung, Jalousien, Heizung, usw., zu steuern bzw. zu regeln.

Gemäß einer vorteilhaften Ausführungsform der Erfindung ist vorgesehen, daß der Web-Server eine graphische Benutzerschnittstelle beinhaltet, wobei auf der Anzeigeeinrichtung der Telefonapparate eine Visualisierung davon darstellbar ist. Durch diese Maßnahme ist eine einfachere und raschere, weil intuitivere Bedienung ermöglicht.

Vorteilhafterweise können darüber hinaus die Telefonanlage und die Steuer- und Regeleinrichtung mit einer analogen oder digitalen Torsprechanlage bzw. Torstelle od. dgl. verbunden sein, um auch die Zutrittskontrolle und -steuerung komplett in das Netzwerk einzubinden.

Um die umfassende Bedienung und Visualisierung jeglichen Bereiches der Gebäudeleit- und Überwachungstechnik über die Telefonanlage zu ermöglichen, ist gemäß einer weiteren vorteilhaften Ausführungsform der Erfindung vorgesehen, daß eine Kamera der Torsprechanlage mit der Steuer- und Regeleinrichtung als auch über einen Video-Integrationsserver mit der Telefonanlage verbunden ist, wobei auf zumindest einem Telefonapparat mit Anzeigeeinrichtung das Videobild darstellbar ist.

Vorteilhafterweise ist dabei vorgesehen, daß der Video-Integrationsserver das Bild der Kamera aufbereitet und als XML-Objekt an zumindest einen Telefonapparat mit Anzeigeeinrichtung überträgt.

Um auch die Einbindung herkömmlicher, analoger Anlagen zu ermöglichen, kann allenfalls die Torsprechanlage analog mit dem Telefonapparat verbunden sein, auf dem das Bild der Kamera darstellbar ist.

Größtmögliche Integration und Freiheit in der Bedienung, Programmierung und Überwachung ist durch eine erfindungsgemäße Ausführung des Netzwerkes gegeben, die gekennzeichnet ist durch die Einbindung in ein Netzwerk mit zumindest einem weiteren Computer, auf dessen Anzeigeeinrichtung eine Visualisierung der graphischen Benutzerschnittstelle des Web-Servers darstellbar ist und über dessen Eingabeeinrichtungen die Steuer- und Regeleinrichtung steuer- und programmierbar ist.

In der nachfolgenden Beschreibung soll die Erfindung anhand eines bevorzugten Ausführungsbeispieles, das auch in den beigefügten Zeichnungen dargestellt ist, näher erläutert werden.

Dabei zeigt die Fig. 1 ein erfindungsgemäßes Netzwerk in schematischer Darstellung, Fig. 2 ist ein Diagramm betreffend ein Terminal für eine Torsprechstelle, und Fig. 3 zeigt ein Diagramm betreffend die Steuerung von Geräten am Beispiel einer Jalousiebetätigung.

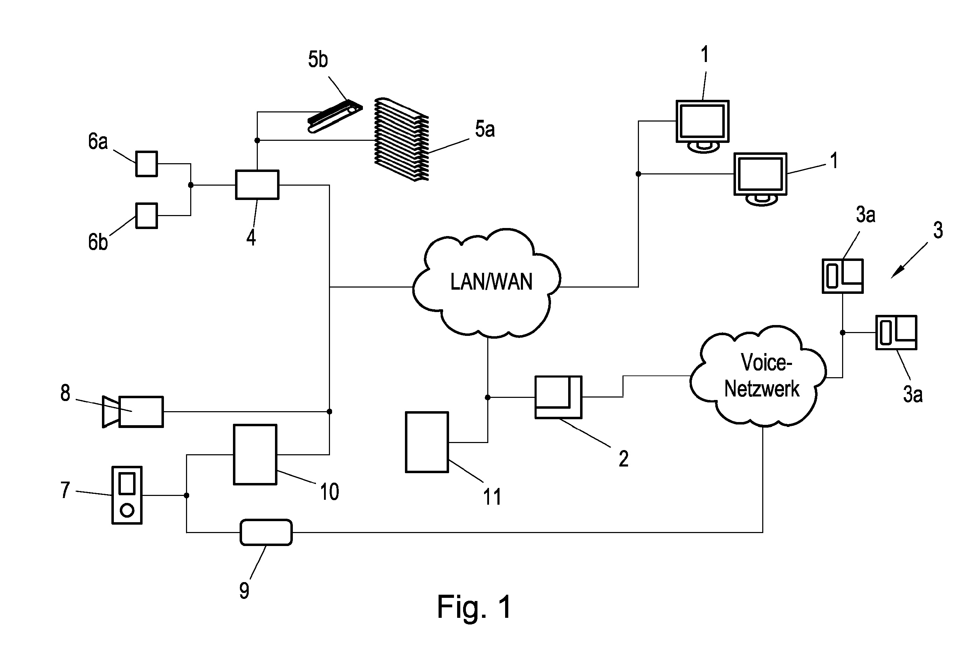

Das in Fig. 1 dargestellte Netzwerk für Daten- und Sprachkommunikation für Gebäude oder Gebäude-Komplexe umfasst beispielhaft mehrere Arbeitsplatz-Computer und/oder Server 1, die über LAN oder WAN miteinander vernetzt sind. Die Datenübertragung erfolgt dabei vorzugsweise über ein Internetprotokoll, vorzugsweise TCP/IP und Ethernet. In das Netzwerk ist auch eine VoIP-Telefonanlage 2 und sind mehrere IP-Telefonapparate 3 eingebunden, von welchen IP-Telefonen 3 zumindest eines davon mit einer Anzeigeeinrichtung 3a ausgestattet ist. Die VoIP-Telefonanlage 2 und die IP-Telefone 3 bilden innerhalb des Netzwerks ein Voice-Netzwerk.

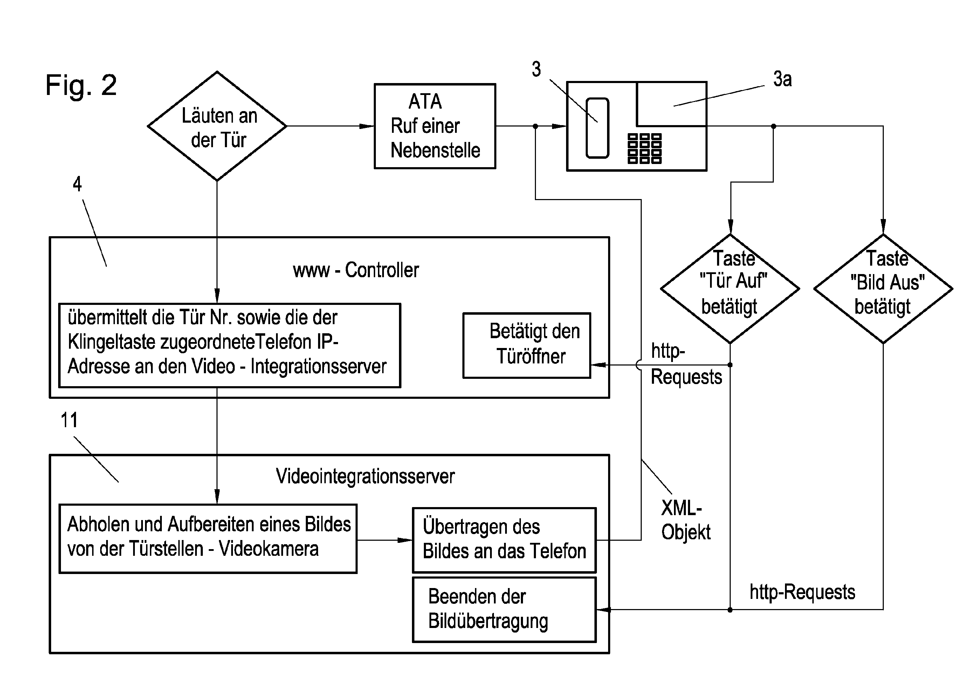

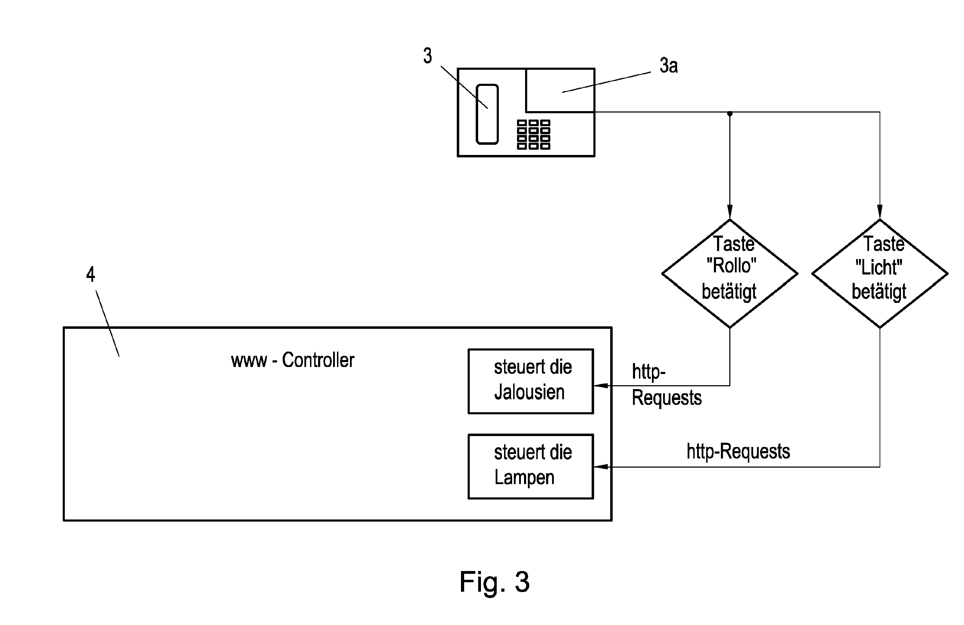

In das Netzwerk eingebunden ist zusätzlich noch eine Steuer- und Regeleinrichtung 4 für die Gebäudetechnik, symbolisiert durch die beispielhaft dargestellte Jalousie 5a bzw. Beleuchtung 5b, wobei die Steuer- und Regeleinrichtung 4 auch mit Sensorik verbunden sein kann, beispielsweise Wind- und Temperaturfühlern 6a sowie Helligkeitssensoren 6b. Vorteilhafterweise ist im dargestellten Netzwerk die die Telefonanlage 2 ebenso über ein Internet-Protokoll, vorzugsweise wieder TCP/IP und Ethernet, mit der Steuer- und Regeleinrichtung 4 für die Gebäudeleittechnik verbunden wie vorzugsweise auch die Computer und/oder Server 1. Dafür ist in der Steuer- und Regeleinrichtung 4 ein Web-Server implementiert und kommuniziert zumindest einer der Telefonapparate 3 über das Internet-Protokoll mit der Steuer- und Regeleinrichtung 4. Spezielle Beispiele dafür werden in den Fig. 2 und 3 sowie weiter unten in der Beschreibung erläutert. Natürlich können in der Steuer- und Regeleinrichtung 4 auch von außen unabhängige Regelkreise verwirklicht sein.

Die Bedienung der Gebäudeleittechnik über eines oder mehrere der Telefone 3 kann wesentlich erleichtert werden, wenn der Web-Server der Steuer- und Regeleinrichtung 4 auch eine graphische Benutzerschnittstelle beinhaltet, für welche auf der Anzeigeeinrichtung 3a der Telefonapparate 3 eine Visualisierung darstellbar ist.

Zur Gebäudetechnik gehört auch zumindest eine analoge oder auch digitale Torsprechstelle 7, vorzugsweise mit Zugangskontrolle, allenfalls auch mit einer zugehörigen Kamera 8. Eine digitale Torsprechstelle kann direkt über die VoIP-Telefonanlage 2 in das Voice-Netzwerk eingebunden werden, eine analoge Sprechstelle 7 wird wie im dargestellten Beispiel über eine analoge Telefonanlage 9 in das Voice-Netzwerk integriert. Zwischen der Torsprechstelle 7 und den anderen Komponenten des Netzwerkes kann noch ein Analog-zu-IP-Video-Server 10 zwischengeschaltet sein. Das Videobild der Kamera 8 wird für die Telefonanlage 2 und die oder alle der Torsprechstelle 7 zugeordneten Telefone 3 über einen Video-Integrations-Server 11 aufbereitet.

Da an der Torsprechstelle 7 Geräte zur Abfrage und zur Bedienung vorhanden sind, beispielsweise die Kamera 8, der Klingelknopf der Torsprechstelle, ein Türöffner, usw., ist auch die Steuer- und Regeleinrichtung 4 über das Netzwerk mit der Torsprechstelle 7 verknüpft.

Fig. 2 zeigt eine beispielhafte Einbindung einer Torsprechstelle 7 in das Netzwerk. Die Betätigung der Türklingel bewirkt einerseits über die analoge Telefonanlage 9 den Ruf zu einer Nebenstelle des Voice-Netzwerkes, d.h. zu einem zugeordneten IP-Telefonapparat 3. Gleichzeitig wird aber auch die Regel- und Steuereinrichtung 4 angesprochen, welche eine Identifikation der Tür und die zugeordnete IP-Adresse des zugeordneten Telefonapparates 3 an den Video-Integrations-Server 11 schickt. Falls die Kamera 8 noch nicht läuft, wird über die Steuer- und Regeleinrichtung 4 auch die Kamera 8 aktiviert.

Der Video-Integrations-Server 11 holt das Bild der Kamera 8 und verarbeitet es. Danach überträgt der Server 11 das Bild als XML-Objekt an die ihm von der Steuer- und Regeleinrichtung 4 mitgeteilte IP-Adresse, d.h. an den der Tür zugeordneten IP-Telefonapparat 3, auf dessen Anzeigeeinrichtung 3a das Videobild der Kamera 8 dann dargestellt wird.

Über den Telefonapparat 3 können dann über http-Requests mittels Betätigung jeweils einer zugeordneten Taste die Steuer- und Regeleinrichtung 4 zum Öffnen der Tür und/oder der Video-Integrations-Server 11 zur Beendigung der Bildübertragung angesprochen werden.

Wie in Fig. 3 dargestellt ist, können über die IP-Telefonapparate 3 aber auch alle ansteuerbaren Geräte des Gebäudes bedient werden. So kann über Tasten am Telefonapparat 3 die Steuer- und Regeleinrichtung 4 angesprochen werden, wieder über http-Requests, um Jalousien, Licht, usw. zu betätigen.

## Patentansprüche

1. Netzwerk für Daten- und Sprachkommunikation für Gebäude oder Gebäude-Komplexe, umfassend eine VoIP-Telefonanlage und mehrere IP-Telefonapparate, zumindest einer davon mit einer Anzeigeeinrichtung ausgestattet, **dadurch gekennzeichnet, daß** die Telefonanlage (2) über ein Internet-Protokoll mit einer Steuer- und Regeleinrichtung (4) für die Gebäudeleittechnik verbunden ist, wobei die Steuer- und Regeleinrichtung (4) einen Web-Server beinhaltet und zumindest einer der Telefonapparate (3) über ein Internet-Protokoll mit der Steuer- und Regeleinrichtung (4) kommuniziert.

2. Netzwerk nach Anspruch 1, **dadurch gekennzeichnet, daß** der Web-Server eine graphische Benutzerschnittstelle beinhaltet, wobei auf der Anzeigeeinrichtung (3a) der Telefonapparate (3) eine Visualisierung davon darstellbar ist.

3. Netzwerk nach Anspruch 1 oder 2, **dadurch gekennzeichnet, daß** die Telefonanlage (2) und die Steuer- und Regeleinrichtung (4) mit einer analogen oder digitalen Torsprechanlage (7) bzw. Torstelle od. dgl. verbunden sind.

4. Netzwerk nach Anspruch 3, **dadurch gekennzeichnet, daß** eine Kamera (8) der Torsprechanlage (7) mit der Steuer- und Regeleinrichtung (4) als auch über einen Video-Integrationsserver (11) mit der Telefonanlage (2) verbunden ist, wobei auf zumindest einem Telefonapparate (3) mit Anzeigeeinrichtung (3a) das Videobild darstellbar ist.

5. Netzwerk nach Anspruch 4, **dadurch gekennzeichnet, daß** der Video-Integrationsserver (11) das Bild der Kamera (8) aufbereitet und als XML-Objekt an zumindest einen Telefonapparat (3) mit Anzeigeeinrichtung (3a) überträgt.

6. Netzwerk nach einem der Ansprüche 4 oder 5, **dadurch gekennzeichnet, daß** die Torsprechanlage (7) analog mit dem Telefonapparat (3) verbunden ist, auf dem das Bild der Kamera (8) darstellbar ist.

7. Netzwerk nach einem der Ansprüche 1 bis 6, **gekennzeichnet durch** die Einbindung in ein Netzwerk mit zumindest einem weiteren Computer (1), auf dessen Anzeigeeinrichtung eine Visualisierung der graphischen Benutzerschnittstelle des Web-Servers darstellbar ist und über dessen Eingabeeinrichtungen die Steuer- und Regeleinrichtung (4) steuer- und programmierbar ist.
